# FASCICULE DE BREVET EUROPEEN

(11) **EP 3 749 565 B1**
(45) Date de publication et mention de la délivrance du brevet: **14.07.2021**
(21) Numéro de dépôt: 18830460.4
(22) Date de dépôt: 19.12.2018
(51) Int. Cl.: B62D 1/184, B62D 1/189

(54) **COLONNE DE DIRECTION**
LENKSÄULE
STEERING COLUMN

(30) Priorité: 27.12.2017 FR 1763269
(43) Date de publication de la demande: 16.12.2020
(73) Titulaire: Robert Bosch Automotive Steering Vendôme, 41100 Vendome (FR)
(72) Inventeur: THEBAULT, Stephane, 41100 AZE (FR); GENET, Nicolas, 41100 COULOMMIERS LA TOUR (FR); PATA, Christophe, 41100 Saint-Ouen (FR); RENARD, Jérémie, 44360 Vigneux-de-Bretagne (FR); MOULYS, Benjamin, 72310 BESSE SUR BRAYE (FR); DE WEER, Alexis, 41 100 Vendome (FR)
(74) Mandataire: Alatis
(86) Numéro de dépôt international: PCT/EP2018/085856
(87) Numéro de publication internationale: WO 2019/129574

(56) Documents cités:
- EP-A1- 3 093 211
- US-A1- 2014 373 663

## Description

### Domaine de l'invention

La présente invention a pour objet une colonne de direction comprenant :
A. un berceau monté basculant sur la carrosserie du véhicule et recevant dans un palier déformable, un manchon muni d'un tube portant le volant et solidaire en translation du manchon mais libre en rotation par rapport à celui-ci,
   * le manchon se réglant par coulissement dans le palier déformable desserré,
B. un dispositif de serrage du palier déformable comprenant :
   * un levier de manœuvre portant par une rosace, un axe de serrage dont l'extrémité s'appuie directement sur le palier, le levier s'appuyant sur le palier par l'intermédiaire d'un bloc d'appui fixe en rotation mais libre en translation sur l'axe de serrage,
   * le levier étant appuyé par sa rosace sur le bloc d'appui par une liaison à rampes qui,
      * pour le mouvement du levier dans le sens du serrage, resserre le palier entre l'extrémité de la vis et le bloc d'appui pour bloquer le palier déformable sur le manchon, et
      * pour le mouvement du levier dans le sens du desserrage, libère le palier et le manchon pour le réglage.

### Etat de la technique

Il est connu d'amortir le mouvement de desserrage de la colonne de direction pour permettre son réglage tant en basculement qu'en coulissement mais les moyens utilisés sont en général compliqués et surtout ils ne permettent pas d'éviter le bruit de fin de course qui est un bruit métal contre métal.

Dans le document EP3093211A1 est décrit une colonne de direction avec les caractéristiques du préambule de la revendication 1.

### But de l'invention

La présente invention a pour but de développer une colonne de direction comportant des moyens permettant de rendre son déverrouillage silencieux pour améliorer le confort d'utilisation pour la manœuvre de réglage d'une colonne de direction.

### Exposé et avantages de l'invention

A cet effet, l'invention a pour objet une colonne de direction selon la revendication 1.

Cette colonne de direction a l'avantage d'avoir un fonctionnement très silencieux et d'éviter le choc du mécanisme en fin de course de desserrage. Cette solution améliore le confort d'utilisation et est particulièrement simple à réaliser sans empiéter sur la sécurité du serrage de la colonne de direction après son réglage.

Suivant une autre caractéristique particulièrement avantageuse, la liaison déployable entre la rosace et le bloc d'appui est formée par une rosace à dents fixant l'axe de serrage et laissant entre elles des segments circulaires, et par le bloc d'appui, traversé par l'axe de serrage, ayant, réparties autour du palier de l'axe, une rampe pour chaque dent, ces rampes se terminant par une butée venant en saillie dans les segments circulaires entre deux dents pour que chaque dent remonte sa rampe lors du mouvement de serrage et la descende lors du mouvement de desserrage, la butée d'au moins une rampe venant contre l'élément amortisseur de son segment circulaire.

Suivant une autre caractéristique avantageuse, la rampe se poursuit par un plateau en amont de sa butée dans le sens du serrage.

Ce plateau stabilise le positionnement de la dent/rosace évitant toute ouverture intempestive du serrage des réglages de la colonne de direction en cas de choc.

Suivant une autre caractéristique, l'élément amortisseur est fixé par enclipsage dans une découpe du bord du côté de desserrage de la dent. Cette réalisation particulièrement simple permet d'équiper facilement la colonne de direction.

Suivant une autre caractéristique avantageuse, l'élément amortisseur en forme de pion en une matière souple est composé d'une partie intermédiaire cylindrique circulaire et de deux extrémités élargies débordant des deux faces de la rosace, la partie intermédiaire étant clipsée dans la découpe circulaire de dimensions supérieures à celles d'un demi-disque circulaire.

La forme de l'élément amortisseur qui s'appuie ainsi sur les deux faces de la rosace garantit son maintien efficace et son effet d'amortissement.

Suivant une autre caractéristique avantageuse, la rampe est en forme de surface hélicoïdale dont l'axe est l'axe géométrique de l'axe de serrage. Cette forme de rampe est particulièrement simple à réaliser puisque d'une forme géométrique simple.

Suivant une autre caractéristique, les dents et les butées ont des côtés d'orientation radiale par rapport à l'axe géométrique de l'axe de serrage.

Cette forme des dents et des butées va dans le sens d'une simplification de réalisation et d'une efficacité de fonctionnement.

Suivant une autre caractéristique avantageuse, la surface d'appui d'une dent sur la rosace est inférieure à l'intervalle entre l'origine de la rampe et le côté de la butée délimitant cet intervalle avec l'origine. On garantit ainsi un positionnement stable de la rosace en position desserrée sans pour autant gêner le mouvement de resserrage de la colonne de direction une fois les réglages effectués.

En variante à cette réalisation, selon une autre caractéristique avantageuse, la liaison déployable est formée par une rosace munie d'un segment circulaire et reliée au bloc d'appui par des biellettes à rotules, reçues dans des coupelles à rotules de la rosace et du bloc d'appui, le bloc d'appui ayant au moins une butée venant dans le segment circulaire dont la fin de course de desserrage est munie de l'élément amortisseur.

### Dessins

La présente invention sera décrite ci-après de manière plus détaillée à l'aide de modes de réalisation d'une colonne de direction représentés dans les dessins annexés dans lesquels :
- la figure 1 est une vue isométrique d'une colonne de direction selon l'invention,
- la figure 2 est une vue éclatée de la colonne de direction de la figure 1,
- la figure 3 est une vue isométrique de la colonne de direction de la figure 1 en position de réglage,
- la figure 4 représente un levier de manœuvre avec sa rosace,
- la figure 5, dans ses parties 5A, 5B, montre respectivement en vue isométrique, la face et le dos du bloc d'appui du dispositif de serrage,
- la figure 6, dans ses parties 6A, 6B, montre le levier de manœuvre combiné au bloc d'appui en position de verrouillage et en position de déverrouillage, sa partie 6C montrant le déroulement d'une coupe des rampes du bloc d'appui,
- la figure 7, dans ses parties 7A, 7B, montre chaque fois une vue isométrique de la position du levier de manœuvre et du bloc d'appui en position de desserrage et en position de serrage,
- la figure 8, dans ses parties 8A, 8AB, 8B, montre des vues de face respectives du levier de manœuvre avec sa rosace et le bloc d'appui en position desserrée, en position intermédiaire et en position serrée,
- la figure 9 dans ses parties 9A-9D, montre différents modes de réalisation de l'élément amortisseur,
- la figure 10 est une vue isométrique d'une variante de dispositif de serrage,
- la figure 11 est une vue de face de la rosace du dispositif de serrage de la figure 10.

### Description de modes de réalisation de l'invention

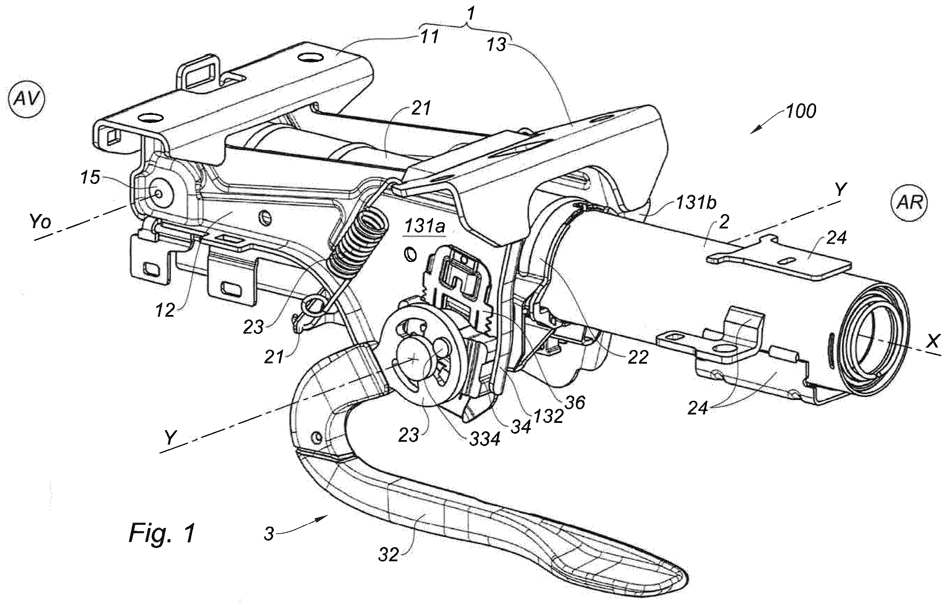

Pour la description des différentes figures, on utilisera comme convention d'orientation, celle de la colonne de direction 100 représentée à la figure 1 et les expressions « amont » et « aval » sont associées au mouvement dans le sens horaire qui est aussi celui du sens de pivotement du levier de manœuvre pour desserrer le blocage de la colonne de direction 100. Le côté avant AV / arrière AR est celui de la colonne de direction installée dans un véhicule.

La figure 1 montre en vue isométrique une colonne de direction 100 selon l'invention composée d'un support 1 fixé à la carrosserie et portant un manchon réglable 2 muni d'un tube non représenté portant le volant. Le tube est solidaire en translation mais libre en rotation du manchon 2. Le manchon 2 se bloque/débloque pour le réglage par un dispositif de serrage 3. La colonne de direction 100 est réglable en inclinaison et en longueur par rapport à la carrosserie.

Le support 1 est formé d'une traverse 11, avant, reliée par deux côtés 12 à un étrier arrière 13. La traverse 11 et l'étrier 13 sont fixés à la carrosserie de façon à suspendre la colonne de direction 100 pour en régler l'inclinaison et la longueur. Un ressort 23 d'un côté ou des deux côtés retient le berceau 21 du manchon 2 au support 1 pour soutenir le manchon 2 pendant le mouvement de réglage angulaire et le mouvement de réglage longitudinal.

Le manchon 2 est porté par le berceau 21 monté basculant autour d'un pivot transversal 15 d'axe Yo-Yo pour le réglage angulaire de la colonne de direction. A son autre extrémité, le berceau 21 est muni d'un palier déformable 22 recevant le manchon réglable 2 longitudinalement par rapport au berceau tout en étant bloqué en rotation. Le palier déformable 22 passe entre les deux bras 131 de l'étrier 13 en forme de U renversé.

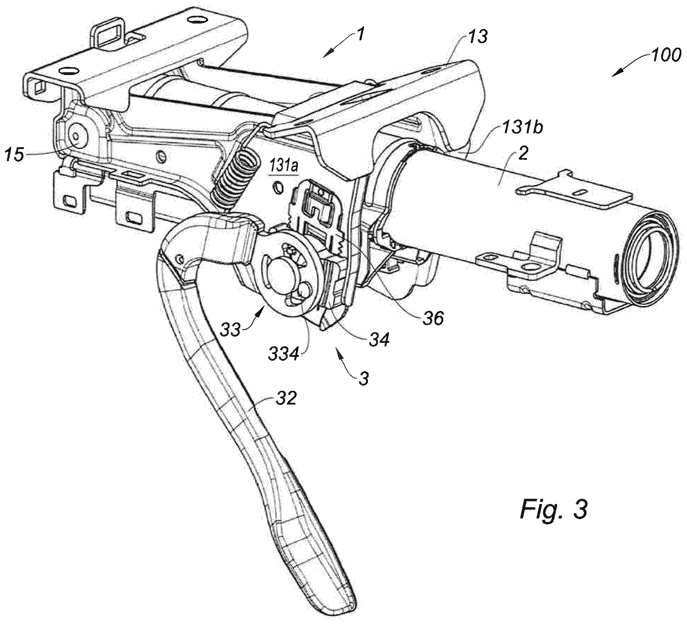

Le dispositif de serrage 3 associé à la fois au berceau 21 et au support 1 au niveau de son étrier 13 et de son palier déformable 22, réalise en même temps le blocage des mouvements de réglage angulaire et de réglage longitudinal du manchon 2 et ainsi de la colonne de direction 100. Le dispositif de serrage 3 est commandé par le levier de manœuvre 32 entre sa position de serrage (figure 1) et sa position de desserrage pour le réglage (figure 3).

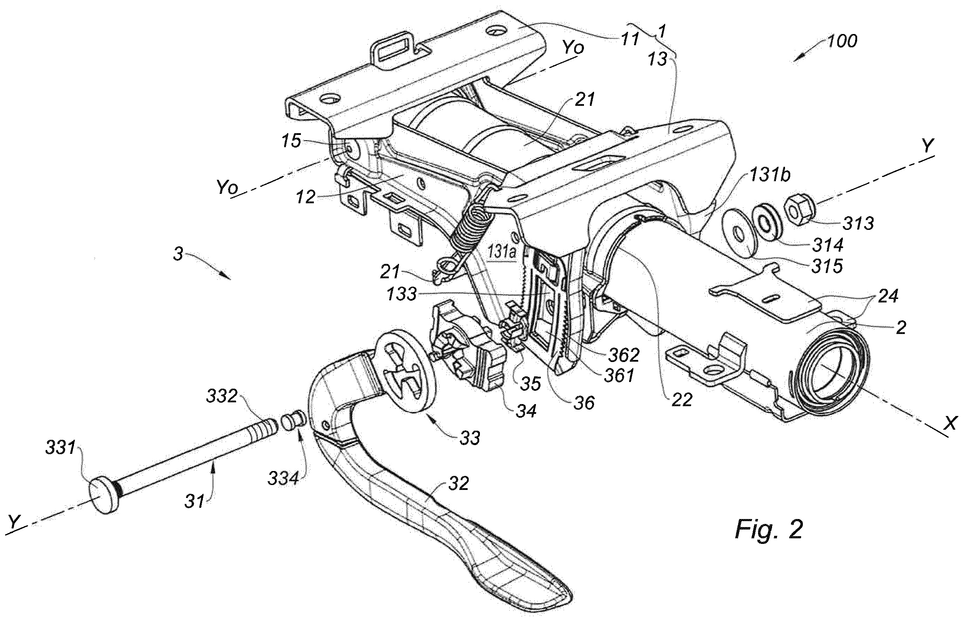

La vue éclatée de la figure 2 montre plus particulièrement le détail du dispositif de serrage 3 aligné sur l'axe transversal YY, perpendiculaire mais non coplanaire à l'axe XX de réglage longitudinal de la colonne de direction 100. Le réglage angulaire se fait par basculement autour de l'axe Yo-Yo du pivot 15 reliant le berceau 21 du manchon 2 aux côtés 12 du support 1. L'axe géométrique YY du dispositif de serrage 3 est mobile car solidaire du berceau 21 ou palier déformable solidaire du berceau 21 par l'intermédiaire du palier déformable 22.

Le dispositif de serrage 3 aligné sur l'axe géométrique YY, comprend :
* un axe de serrage 31 porté par
* un levier de manœuvre 32 solidaire de l'axe de serrage 31 par
   * une rosace 33 fixée à l'extrémité de l'axe de serrage 31,
* un bloc d'appui 34,
* un coulisseau 35,
* une plaque de guidage 36.

Ces composants 33, 34, 35, 36 sont traversés par l'axe de serrage 31 passant sous le manchon 2 après avoir traversé une coulisse du premier bras 131a de l'étrier 13 pour traverser ensuite une seconde coulisse dans le second bras 131b de l'étrier 13 et recevoir au-delà du second bras, un écrou 313 vissé sur l'extrémité filetée 312 de l'axe de serrage 31 avec interposition d'une butée à aiguilles 314 et d'une rondelle 315.

Dans cette succession de composants, la rosace 33 s'appuie contre la face 34a du bloc d'appui 34 venant lui-même contre le premier bras 131a de l'étrier 13 ; l'écrou 313 vient extérieurement contre son second bras 131b.

Le second bras 131b de l'étrier 13 qui n'apparaît que partiellement, est de forme plus simple que le premier bras 131a et ne comporte qu'une coulisse « verticale » pour le passage de l'axe de serrage 31 sans les composants de blocage du réglage angulaire comme cela est le cas pour le premier bras 131a apparaissant dans les vues isométriques des figures 1, 2, 3.

Le bloc d'appui 34 est fixe en rotation par rapport à l'axe 31 mais libre en translation à la fois dans la direction « verticale » de la coulisse du bras 131a et le long de l'axe de serrage 31 (direction YY) de sorte que l'effet de came décrit, entre la rosace 33 et le bloc d'appui 34, génère par le pivotement de la rosace 33 et du levier 32, le déplacement axial du bloc d'appui 34 qui, selon le sens de déplacement, comprime ou décomprime les bras 131a, 131b, le palier déformable 22 et le berceau 21 sur le manchon 2 par rapport à l'étrier 13.

La figure 3 montre la colonne de direction 100 en position de réglage, desserrée. Le levier 32 a été pivoté dans le sens horaire à partir de sa position de serrage représentée à la figure 1.

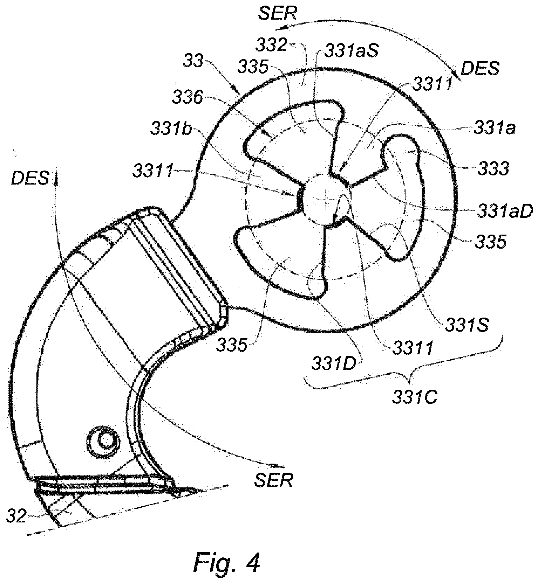

Selon les figures 2 et 4, la rosace 33 est solidaire de l'extrémité du levier de manœuvre 32 de forme coudée. La rosace 33 est un disque circulaire découpé avec trois dents radiales 331 portées par une couronne périphérique 332 et formant par les extrémités 3311, une surface circulaire discontinue dans laquelle est fixé l'axe de serrage 31, par une liaison frettée.

Les dents 331 sont identifiées pour la description de leur fonctionnement par leurs références numériques complétées par un suffixe a, b, c ; chaque dent 331 (voir la dent 331c) a un coté serrage 331S et un côté desserrage 331D selon le sens de pivotement du levier 32 et de la rosace 33 pour arriver en position de serrage (flèche SER) ou en position de desserrage (flèche DES) correspondant respectivement au sens antihoraire et au sens horaire.

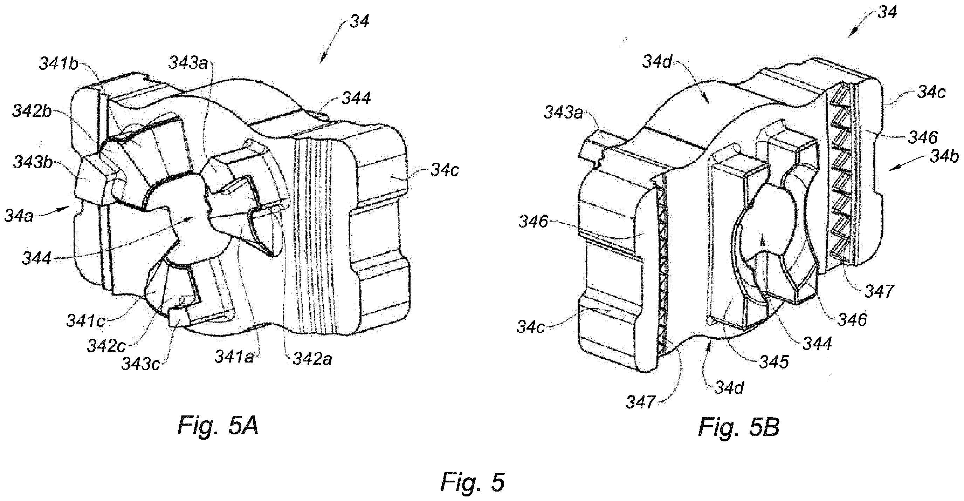

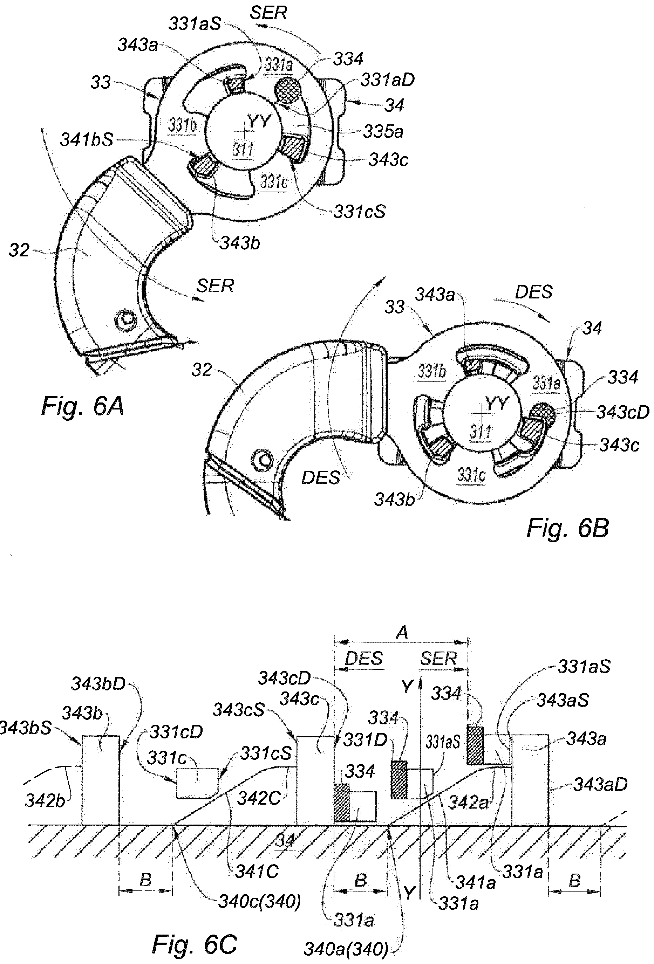

Les côtés en regard de deux dents 331 délimitent entre eux un segment circulaire 335 couvrant chacun le chemin de circulation 336 relatif des cames en forme de rampes 341 (figure 5A) avec lesquelles coopèrent les dents 331 (figures 5A, 6A-6C). Appliqué au mouvement de pivotement du levier 32 et de la rosace 33, cela signifie que chaque dent 331 est dans l'intervalle circulaire entre les deux butées de deux rampes successives, par exemple 343aS et 343cD.

L'une (331a) des dents 331 a un côté 331aD (venant contre la butée de fin de course de desserrage), avec une découpe 333 pour recevoir l'élément amortisseur 334. L'élément amortisseur 334 est notamment en forme de pion pour amortir la fin de course de desserrage.

Les dents radiales 331 (figure 4), de forme triangulaire, délimitent les segments circulaires 335 après mise en place de l'axe 31 dont la tête 311 vient s'appuyer extérieurement contre les dents 331.

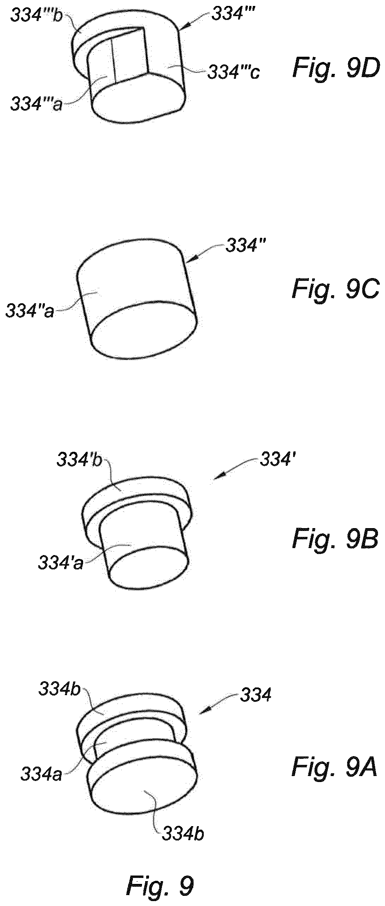

Le pion amortisseur 334 (figures 2 et 9) en un matériau souple est en forme de diabolo avec ses deux extrémités élargies 333b débordant sur les deux faces de la rosace 33 alors que la partie intermédiaire est un corps cylindrique 334. L'élément amortisseur ou pion 334 est clipsé par son corps cylindrique dans la découpe circulaire 333 de section de préférence supérieure à un demi-disque circulaire pour permettre de retenir efficacement le pion. La figure 1 montrent le pion amortisseur 334 installé par clipsage dans la rosace 33, représentée dans la position de fin de course de pivotement de serrage du levier de manœuvre 32.

La rosace 33 coopère avec le bloc d'appui 34 traversé librement par l'axe de serrage 31 (figure 2, figures 5A, 5B). Le bloc 34 de forme rectangulaire a une face 34a tournée vers la rosace 33 et un dos 34b tourné vers le premier bras 131 de l'étrier 13.

La face 34a (figures 2 et 5A) est munie de trois rampes 341a-c réparties symétriquement autour du palier 344 traversé par l'axe de serrage 31. Les trois rampes 341a-c croissantes dans le sens antihoraire (sens de serrage SER) à partir de leur origine 340 sur la face 34a du bloc 34, sont suivies d'un plateau 342a-c et elles se terminent chacune par une butée 343a-c. Chaque rampe 341 est une surface sensiblement hélicoïdale par rapport à l'axe géométrique YY du palier 344 du bloc d'appui 34.

L'origine 340 de chaque rampe 341 est distante de la butée 343 de la rampe précédente d'un intervalle B permettant la venue en appui de la dent 331.

Comme la rampe 343 est une surface hélicoïdale, son origine 340 sur la face 34a est radiale de même que les faces 343S et 343D des butées 343 comme cela sera vu ensuite.

L'intervalle B entre l'amorce 340 de la rampe et la butée 343 de la rampe précédente est une surface trapézoïdale dont les petits côtés sont orientés radialement et correspondent à la forme générale sensiblement trapézoïdale des dents 331 dont les côtés 331s et 331D sont orientés sensiblement dans la direction radiale. La surface d'appui de la dent 331 sur la rosace 33 est inférieure à l'intervalle B entre l'origine 340 et le côté 343D de la butée délimitant cet intervalle B.

Cette concordance entre la surface en appui des dents 331 et de l'intervalle B entre les rampes 341 réalise un positionnement de desserrage stable de la rosace 33.

Les dents 331 de la rosace 33 coopèrent avec les rampes 341. Le bloc d'appui 34 est fixe en rotation car tenu comme cela sera décrit, par le bras 131a de l'étier, tout en étant libre en translation le long de l'axe 31 dans la direction YY ; le mouvement antihoraire (sens de serrage SER) de la rosace 33 fait remonter les dents 331 sur les rampes 341 en repoussant ainsi le bloc d'appui 34 en l'écartant de la rosace 33. Comme la longueur de l'axe 31 entre la rosace 33 et l'écrou 313 à l'extrémité de l'axe 31 est fixe, le bloc 34 pousse contre le premier bras 131a et l'écrou 313 contre le second bras 131b en bloquant ainsi les deux réglages de la colonne, ce qui correspond à la position du levier de manœuvre 32 de la figure 1.

Les rampes 341 se poursuivant par un plateau 342 en amont des butées 343, le mouvement de pivotement n'augmente plus le serrage lorsque les dents 331 arrivent sur les plateaux 342.

Inversement, le mouvement horaire de pivotement (sens de desserrage DES) du levier 32 et de la rosace 33 fait descendre les dents 331 le long des rampes 341 et décomprime le dispositif de serrage 3, libérant les réglages. Ce mouvement de libération est brutal car il correspond à la détente de l'état comprimé des différents composants du dispositif de serrage 3. Mais ce mouvement de desserrage ne commence que lorsque les dents 331 arrivent sur leur rampe 341.

Dans ce montage, la butée 343 à l'extrémité de chaque rampe 341 venant au moins partiellement dans le segment de couronne circulaire 335 associé, en fin de mouvement de desserrage (descente de la rampe 341 par la dent 331), le côté 331D de chaque dent 331 vient contre une butée 343 ; il s'agit d'un mouvement relatif car la rosace 33 pivote autour de l'axe YY alors que le bloc 34 et ses rampes 341 sont fixes en rotation autour de l'axe YY.

De façon plus détaillée, selon les figures 5A, 5B, le bloc de guidage 34 est une pièce pleine, assimilable à un parallélépipède rectangle dont les côtés latéraux 34c et le dessus/dessous 34d ont une forme combinant celle d'un disque centré sur l'axe YY pour recevoir et entourer les rampes 341 et celle d'un rectangle pour les autres fonctions du bloc d'appui 34 dont les coins sont arrondis.

L'un des côtés 34c glisse le long du bord replié 132 (figure 1) du premier bras 131a au-delà de l'emplacement de la plaque de guidage 36.

Comme déjà décrit, la face 34a comporte trois rampes 341a-c réparties autour du perçage formant le palier 344 selon une disposition sensiblement symétrique en rotation. Les rampes 341a-c se terminent chacune par une butée 343a-c.

Le bloc d'appui 34 coopère par son dos 34b avec le bras 131a dont la fenêtre assure le guidage « vertical ». La plaque de guidage 36 (figure 2) est aussi munie d'une fenêtre 361. Le dos 34b du bloc d'appui 34 est muni de deux barrettes de guidage 345 en relief autour du perçage du palier 344 pour former des guides dans la fenêtre 361 et recevoir le coulisseau 35.

Au niveau de chaque côté 34c, le bloc d'appui 34 forme deux bandes d'appui 346 bordées intérieurement par une rangée de dents 347. Les dents de chaque rangée 347 coopèrent au serrage avec les dents des bords dentelés 362 de la plaque de guidage 36 pour bloquer le réglage du basculement.

Les dents améliorent la tenue en basculement surtout pour le crash. La fermeture du système de serrage provoque une friction suffisante pour le maintien du système dans une condition normale.

Les figures 6A, 6B montrent une vue de face dans l'axe YY de l'engagement des trois butées 343a-c des rampes 341a-c du bloc d'appui 34 dans les segments circulaires 335 de la rosace 33 en position de serrage (figure 6A) et en position de desserrage (figure 6B) ; ces deux positions correspondent à des positions de fin de course.

Pour rendre les figures 6A, 6B plus explicites, les butées 343 (341a-c) sont figurées par des dessus foncés qui, pour des raisons de conception, ne sont pas forcément identiques.

Comme indiqué ci-dessus, chaque butée 343a-c est associée à un segment circulaire 335 de la rosace 33 et vient en saillie dans son segment 335 pour servir de butée de fin de course aux côtés 331S et 331D des dents 331, pivotées respectivement en position de fin de course de serrage (direction SER) définie par les côtés 343S des butées 343 (respectivement 343aS, 343bS, 343cS) et en position de fin de course de déserrage définies par les côtés 343D des butées 343, respectivement 343bD, 343cD, 343aD pour ces mêmes dents.

En d'autres termes, l'intervalle entre deux butées 343a-c fixes en rotation, reçoit une dent 331 et les deux butées 343a-c qui délimitent chaque intervalle constituent pour chaque dent 331 une butée de fin de course de serrage et de desserrage de la rosace 33.

Ainsi, la dent 331a est mobile entre la butée de fin de course de serrage 343a et la butée de fin de course de desserrage 343c pour son intervalle A compris entre les côtés en regard 343aS, 343cD des butées 343a et 343c, il en est de même pour les autres dents 331b et 331c puisque la rosace 33 pivote dans le sens SER ou DES par rapport au bloc 34 fixe en rotation autour de l'axe géométrique YY.

Selon la figure 6A et en référence à la figure 4, le levier de manœuvre 32 et sa rosace 33 ont été pivotés en position de serrage (flèches SER) dans le sens antihoraire.

La butée 343a de la rampe 341a (cachée par la dent 331a) retient le côté 331aS de la dent 331a; les autres dents 331b, 331c sont pivotées avec les côtés 331bS, 331cS contre les butées 343b et 343c également fixes par hypothèse.

La figure 6B montre la fin de course de desserrage DES dans laquelle, par le pivotement du levier 32 et de la rosace 33 dans la direction DES, le côté 331aD de la dent 331a avec son pion amortisseur 334 est venu en appui contre le côté 343cD de la butée 343c ; il en est de même et avec un certain retard correspondant à la phase d'écrasement du pion 334, des côtés 331bD et 331cD des dents 331b et 331c qui viennent contre le côté 343cD, 343aD des butées 343c et 343a.

A titre d'exemple, la position de la dent 331a apparaît à la figure 6C qui est le déroulement des rampes 341a-c du bloc 34 mettant en évidence l'intervalle circulaire A entre les deux butées 343c et 343a recevant la dent 331a :
- la butée 343a limite le mouvement de rotation de la rosace 33 et de la dent 331a en position de serrage SER par son côté 343aS au-delà du plateau 342a,
- la butée 343c limite le mouvement de rotation de la rosace 33 et de la dent 331a dans le sens du desserrage DES par son côté 343cD.

En fin de course de serrage SER, le côté 331aS de la dent 331a rencontre le côté 341aS de la butée 343a.

En fin de course de desserrage DES, le côté 331aD de la dent 331a rencontre le côté 343cD de la butée 343c par le pion amortisseur 334.

Les différents mouvements se font de façon presque simultanée avec les autres dents 331b et 331c de la rosace 33.

Le mouvement brusque déclenché par le levier de manœuvre 32 et la rosace 33 par la libération du blocage des réglages de la colonne 100 est amorti par la venue en butée du pion amortisseur 334 contre la butée de fin de course 343c. Les deux autres dents 331b et 331c viennent alors en douceur en appui contre leur butée de desserrage 343c et 343d, respective, ce qui évite tout bruit de choc métal contre métal.

Cette venue en butée de desserrage représentée à la figure 6B est schématisée à la figure 6C qui montre le mouvement de la dent 331a par rapport à ses deux butées de fin de course 343a (serrage) et 343c (desserrage) et à leurs côtés 343aS et 343cD.

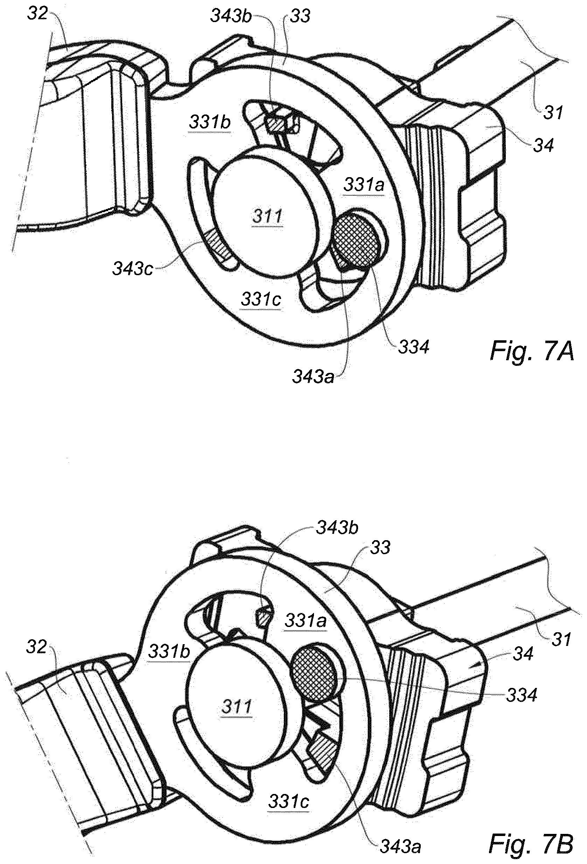

Selon les figures 7A, 7B, en liaison avec la figure 5A, les rampes 341 du bloc d'appui 34 sont des rampes de forme hélicoïdale avec lesquelles coopère le dos des dents 331 de la rosace 33.

Les rampes 341 sont orientées dans le sens « montant » des dents 331 de la rosace 33 pour un pivotement du levier 32 dans le sens antihoraire et passer de la position desserrée (figure 7A) à la position serrée (figure 7B).

Le pivotement du levier 32 passant de la position de la figure 7A à celle de la figure 7B écarte le bloc d'appui 34 par rapport à la rosace 33 et produit la compression du dispositif de serrage 3 puisque la longueur de l'axe 31 entre la rosace 33 et l'extrémité filetée 312 munie de l'écrou 313 est une longueur fixe, bloquée.

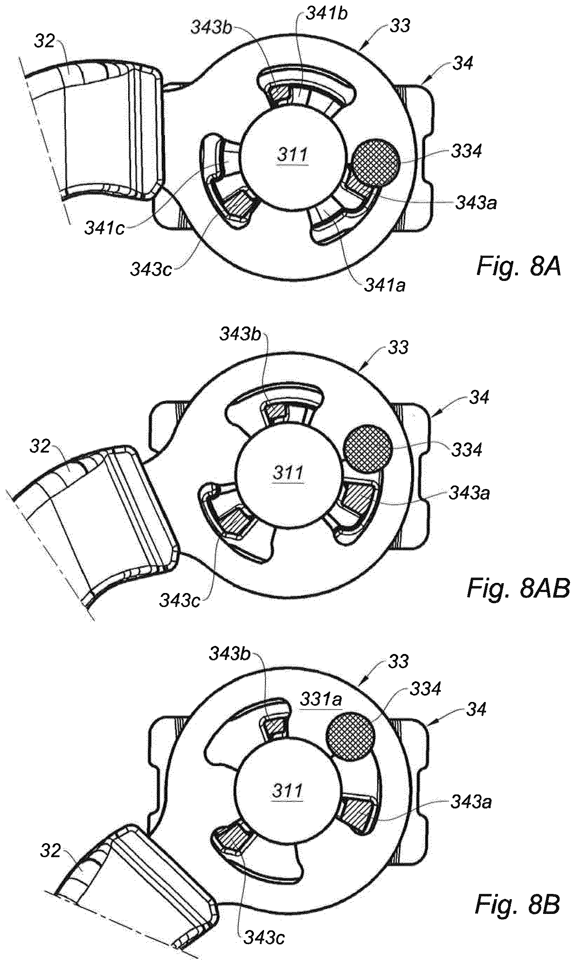

Les figures 8A, 8AB, 8B sont des vues de face des deux positions extrêmes (figures 8A, 8B) et d'une position intermédiaire (figure 8AB).

Pour la fin de course de desserrage (figure 8A), l'élasticité des composants du dispositif de serrage 3 et de l'ensemble 13/131a; 131b, 21 et leur mise en compression et en contrainte, se libère et tend à propulser la rosace 33 et son levier 32 vers la position de fin de course de desserrage. A l'approche de cette position de pivotement du levier 32, le pion d'amortissement 334 rencontre la butée du bloc d'appui 34 et amortit le choc en évitant le bruit de choc métal/métal perçu négativement par le conducteur réglant son volant.

Le pion amortisseur 334 se met très simplement en place dans la découpe 333 de l'un des côtés de la dent 331a.

La figure 9 montre dans ses parties 9B-9D, trois variantes d'éléments amortisseurs 334', 334", 334''' mis en parallèle avec l'élément amortisseur 334 représenté à la figure 2.

La figure 9B montre l'élément amortisseur 334' ayant un corps 334'a cylindrique, de section circulaire, pour s'engager dans la découpe 333 de la rosace 33 et une extrémité élargie 334'b.

La seconde variante d'élément amortisseur représenté à la figure 9C est constituée par un simple corps 334"a cylindrique, de section circulaire.

Enfin, la troisième variante 334''' de l'élément amortisseur représenté à la figure 9D se compose d'un corps 334"'a, cylindrique, de section ovale, formant une partie d'amortissement en relief 334"'c, le tout surmonté d'une extrémité élargie 334"'b.

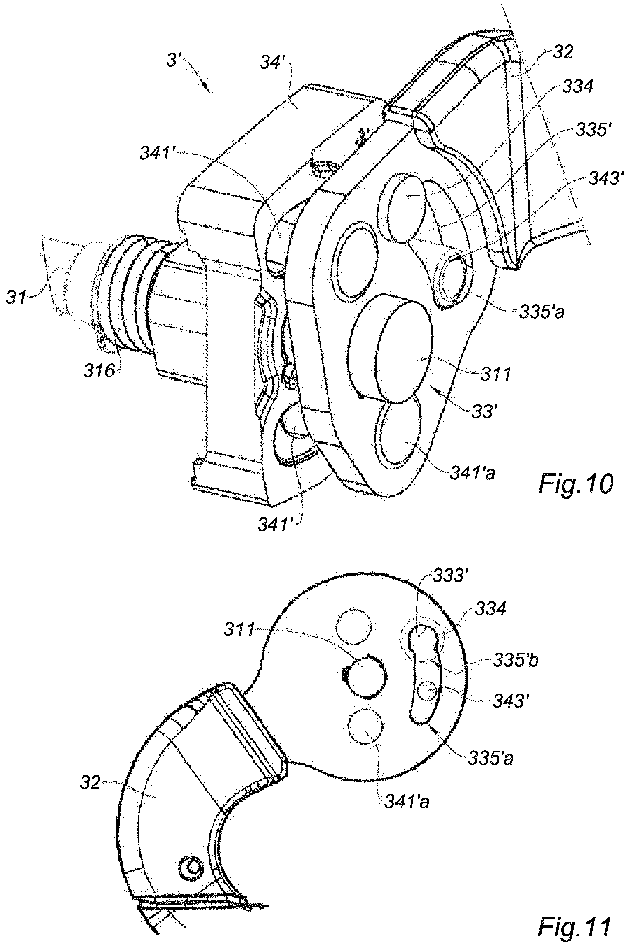

Les figures 10 et 11 montrent une variante de dispositif de serrage 3' dont les éléments identiques à ceux du premier mode de réalisation décrit ci-dessus portent les mêmes références ; les éléments analogues ou de fonction analogue portent les mêmes références numériques complétées par un « ' ».

Le dispositif de serrage 3' se compose d'un axe de serrage 31 dont l'installation dans la colonne de direction est identique à ce qui a été décrit pour le premier mode de réalisation. Ce dispositif de serrage 3' diffère du précédent mode de réalisation par la liaison déployable entre la rosace 33' par laquelle le levier 32 est relié à l'axe de serrage 31 et le bloc d'appui 34'. Cette liaison déployable n'est plus constituée par des rampes mais par deux biellettes 341' connues en soi, dont les extrémités en forme de rotule sont logées dans des coupelles à rotule réalisées dans la rosace 33' et dans le bloc d'appui 34'.

L'embouti des coupelles de la rosace 33' apparaît sous la forme de dômes 341'a.

Le mouvement de pivotement de la rosace 33' fait basculer les biellettes 341' pour écarter ou rapprocher le bloc d'appui 34' de la rosace 33' et ainsi serrer ou desserrer le dispositif de serrage 3' et bloquer ou débloquer les réglages de la colonne de direction. Un ressort 316, emmanché sur l'axe de serrage 31, pousse le bloc d'appui 34' vers la rosace 33' et maintient ainsi les biellettes 341 en compression.

La rosace 33' a un segment circulaire 335' découpé dont les deux extrémités constituent des fins de course 335'a, 335'b. La fin de course de serrage 335'a est l'extrémité du segment circulaire 335' dans le sens du serrage alors que l'autre fin de course 335'b est constituée par un élément amortisseur 334 fixé dans une découpe 333' à l'extrémité de desserrage du segment circulaire 335'. Le bloc d'appui 34' est muni d'une butée 343' de forme cylindrique de section circulaire venant en saillie dans le segment circulaire 335'. Cette butée 343', non élastique, vient en position de serrage, au contact de la fin de course de serrage 335'a qui définit ainsi une position précise de serrage.

Pour le desserrage, la butée 343' amortit le choc entre la butée 343' et l'élément amortisseur 334. Comme dans le premier mode de réalisation, le segment circulaire 335' est mobile et la butée 343' est fixe. Pour la fixation de l'élément amortisseur, le segment circulaire 335' se termine par une découpe 333' recevant l'élément amortisseur 34.

L'élément amortisseur 334 peut être l'une quelconque des variantes des figures 9A-9D.

### NOMENCLATURE DES ELEMENTS PRINCIPAUX

- 100: Colonne de direction
- 1: Support
11 Traverse
12 Côté
13 Etrier
131a Premier bras
131b Second bras
132 Bord replié
15 Pivot
- 2: Manchon
21 Berceau
22 Palier déformable
23 Ressort
24 Patte
- 3, 3': Dispositif de serrage
31 Axe de serrage
311 Tête
312 Extrémité filetée
313 Ecrou
314 Butée à aiguilles
315 Rondelle
316 Ressort
32 Levier de manœuvre
33, 33' Rosace
331 Dent radiale (331a,b,c)
3311 Extrémité
331S Côté serrage de la dent 331 (331aS, 331bS, 331cS)
331D Côté desserrage de la dent 331 (331aD, 331bD, 331cD)
332 Couronne périphérique
333 Découpe
334 Elément amortisseur
334a Corps
334b Extrémité élargie
334', 334", 334''' Variante d'élément amortisseur
335, 335' Segment circulaire
335'a,b Fin de course
336 Chemin circulaire
- 34, 34': Bloc d'appui
34a Face
34b Dos
34c Côté
34d Dessus/dessous
340 Origine de la rampe/340a,340b,340c
341 Rampe (341a-341c)
341' Biellette
341'a Dôme
342a-c Plateau
343,343' Butée (343a-343c)
343S Côté serrage (342aS,343bS,343cS)
343D Côté desserrage (343aD,343bD,343cD)
344 Palier
345 Barrette de guidage
346 Bande d'appui
347 Rangée de dents
- 35: Coulisseau
- 36: Plaque de guidage
361 Fenêtre
362 Bord dentelé

## Revendications

1. Colonne de direction comprenant :
- un berceau (21) destiné à être monté basculant sur la carrosserie d'un véhicule, le berceau étant muni d'un palier déformable (22),
- un manchon (2) reçu dans le palier déformable (22), le manchon étant muni d'un tube portant un volant de direction, le tube étant solidaire en translation du manchon mais libre en rotation par rapport à celui-ci, le manchon (2) se réglant par coulissement dans le palier déformable (22) desserré,
- un dispositif de serrage (3) du palier déformable (22) comprenant :
* un levier de manœuvre (32)
* une rosace (33) solidaire d'une extrémité du levier de manœuvre (32), la rosace (33) ayant au moins un segment circulaire (335, 335') dont une extrémité constitue une fin de course de serrage et l'autre extrémité constitue une fin de course de desserrage ayant un élément amortisseur (334),
* un axe de serrage (31) ayant une première extrémité fixée à la rosace (33) et une deuxième extrémité (312) en appui sur le palier déformable (22)
* un bloc d'appui (34) traversé par l'axe de serrage (31), fixe en rotation par rapport au berceau (21) et libre en translation le long de l'axe de serrage (31), le bloc d'appui (34, 34') ayant une butée (343, 343') venant en saillie dans le segment circulaire (335, 335') pour venir contre la fin de course de serrage en position serrée et contre l'élément amortisseur (334, 334') en position de desserrage,
* une liaison déployable d'appui entre la rosace (33) et le bloc d'appui (34) qui,
** pour un mouvement du levier (32) dans un sens de serrage autour de l'axe de serrage, resserre le palier (22) entre la deuxième extrémité de la vis et le bloc d'appui pour bloquer le palier déformable sur le manchon, et
** pour un mouvement du levier (32) dans un sens de desserrage, libère le palier (22) et le manchon (2) pour le réglage,
**caractérisée en ce que** l'élément amortisseur est choisi dans le groupe comprenant :
- un élément amortisseur (334) formé d'un corps cylindrique à section circulaire (334a) bordé par deux extrémités élargies (334b),
- un élément amortisseur (334') formant d'un corps cylindrique (334'a) à section circulaire, bordé par une extrémité élargie (334'b),
- un élément amortisseur (334") formé d'un corps cylindrique (334"a) à section circulaire,
- un élément amortisseur (334''') formé d'un corps cylindrique (334"'a) à section ovale formant une excroissance (334"'c) et une extrémité élargie (334"'c).

2. Colonne de direction selon la revendication 1, **caractérisée en ce que** la liaison déployable est formée :
- par des dents (331) de la rosace (33), les dents (331) laissant entre elles des segments circulaires (335), et
- par des rampes (341) du bloc d'appui (34), réparties autour du palier de l'axe (31), à raison d'une rampe (341) associée à chaque dent (331), les rampes (341) se terminant par une butée (343) venant en saillie dans les segments circulaires (335) entre deux dents (331) pour que chaque dent remonte la rampe associée (341) lors du mouvement de serrage et la descende lors du mouvement de desserrage, la butée (343) d'au moins une des rampes (341) venant contre l'élément amortisseur (334).

3. Colonne de direction selon la revendication 2, **caractérisé en ce que** chacune des rampes (341) comporte un plateau (342) en amont de sa butée (343) dans le sens du serrage.

4. Colonne de direction selon la revendication 2, **caractérisée en ce que** l'élément amortisseur (334) est positionné sur un côté de desserrage (331aD) de l'une (331a) des dents (331), et fixé par enclipsage dans une découpe (333) du bord du côté de desserrage (331aD) de la dent (331).

5. Colonne de direction selon la revendication 4, **caractérisée en ce que** l'élément amortisseur (334) présente une forme de pion (333) en une matière souple est composé d'un corps (333a) formant une partie intermédiaire cylindrique de section circulaire, et de deux extrémités élargies (334b) débordant de deux faces opposées de la rosace (33), le corps (333a) étant clipsé dans une découpe circulaire (333) de dimensions supérieures à celles d'un demi-disque circulaire, à l'extrémité de desserrage du segment circulaire (335).

6. Colonne de direction selon la revendication 2, **caractérisée en ce que** la rampe (341) est en forme de surface hélicoïdale dont l'axe est l'axe géométrique (YY) de l'axe de serrage (31).

7. Colonne de direction selon la revendication 6, **caractérisée en ce que** les dents (331) et les butées (343) ont des côtés (331S, 331D, 343S, 343D) d'orientation radiale par rapport à l'axe géométrique (YY) de l'axe de serrage (31).

8. Colonne de direction selon la revendication 7, **caractérisée en ce que** la surface d'appui d'une dent (331) sur la rosace (33) est inférieure à l'intervalle (B) entre l'origine (340) de la rampe (341) et le côté (343D) de la butée (343) délimitant cet intervalle (B) avec l'origine (340).

9. Colonne de direction selon la revendication 1, **caractérisée en ce que** la liaison déployable est formée par des biellettes (341) à rotules, reçues dans des coupelles à rotules de la rosace (33') et du bloc d'appui (34').

## Patentansprüche

1. Lenksäule, umfassend:
- eine Halterung (21), die dazu bestimmt ist, kippbar an der Karosserie eines Fahrzeugs angebracht zu werden, wobei die Halterung mit einem verformbaren Lager (22) versehen ist,
- eine in dem verformbaren Lager (22) aufgenommene Muffe (2), wobei die Muffe mit einem Rohr versehen ist, das ein Lenkrad trägt, wobei das Rohr translatorisch fest mit der Muffe verbunden ist, aber in Bezug auf diese frei drehbar ist, wobei die Muffe (2) durch Gleiten in dem verformbaren Lager (22) eingestellt wird, wenn sie gelockert ist,
- eine Vorrichtung (3) zum Spannen des verformbaren Lagers (22), umfassend:
* einem Betätigungshebel (32)
* eine Rosette (33), die mit einem Ende des Betätigungshebels (32) fest verbunden ist, wobei die Rosette (33) mindestens ein Kreissegment (335, 335') aufweist, dessen eines Ende eine Spannwegbegrenzung und dessen anderes Ende eine Lösewegbegrenzung mit einem Dämpfungselement (334) bildet,
* eine Spannachse (31), die mit einem ersten Ende an der Rosette (33) befestigt ist und mit einem zweiten Ende (312) an dem verformbaren Lager (22) anliegt
* einen Stützblock (34), der von der Spannachse (31) durchdrungen wird, und zwar drehfest gegenüber der Halterung (21) und translatorisch frei entlang der Spannachse (31), wobei der Stützblock (34, 34') einen in das Kreissegment (335, 335') hineinragenden Anschlag (343, 343') aufweist, um in der Spannstellung gegen das Ende des Spannweges und in der Lösestellung gegen das Dämpfungselement (334, 334') zu stoßen,
* eine ausfahrbare Stützverbindung zwischen der Rosette (33) und dem Stützblock (34), die,
** bei einer Bewegung des Hebels (32) in einer Spannrichtung um die Spannachse das Lager (22) zwischen dem zweiten Ende der Schraube und dem Stützblock spannt, um das verformbare Lager an der Muffe zu arretieren, und
** bei einer Bewegung des Hebels (32) in eine Löserichtung das Lager (22) und die Muffe (2) zum Einstellen freigibt.
**dadurch gekennzeichnet, dass** das Dämpfungselement ausgewählt ist aus der Gruppe, umfassend:
- ein Dämpfungselement (334), das aus einem zylindrischen Körper mit einem kreisförmigen Querschnitt (334a) gebildet ist, der von zwei vergrößerten Enden (334b) begrenzt wird,
- ein Dämpfungselement (334'), das aus einem zylindrischen Körper (334'a) mit kreisförmigem Querschnitt gebildet ist, der von einem vergrößerten Ende (334'b) begrenzt wird,
- ein Dämpfungselement (334"), das aus einem zylindrischen Körper (334 "a) mit einem kreisförmigen Querschnitt gebildet ist,
- ein Dämpfungselement (334"'), das aus einem zylindrischen Körper (334"'a) mit einem ovalen Querschnitt, der einen Vorsprung (334"'c) bildet, und einem vergrößerten Ende (334"'c) gebildet ist.

2. Lenksäule nach Anspruch 1, **dadurch gekennzeichnet, dass** die ausfahrbare Verbindung gebildet ist:
- durch Zähne (331) der Rosette (33), wobei die Zähne (331) Kreissegmente (335) zwischen sich lassen, und
- durch Rampen (341) des Stützblocks (34), die um das Lager der Achse (31) verteilt sind, wobei jedem Zahn (331) eine Rampe (341) zugeordnet ist, wobei die Rampen (341) in einem Anschlag (343) enden, der in die Kreissegmente (335) zwischen zwei Zähnen (331) hineinragt, so dass jeder Zahn die zugehörige Rampe (341) bei der Spannbewegung anhebt und bei der Lockerungsbewegung absenkt, wobei der Anschlag (343) mindestens einer der Rampen (341) am Dämpfungselement (334) anliegt.

3. Lenksäule nach Anspruch 2, **dadurch gekennzeichnet, dass** jede der Rampen (341) in Spannrichtung vor ihrem Anschlag (343) eine Platte (342) aufweist.

4. Lenksäule nach Anspruch 2, **dadurch gekennzeichnet, dass** das Dämpfungselement (334) auf einer Löseseite (331aD) eines (331a) der Zähne (331) positioniert und durch Einrasten in eine Aussparung (333) des Randes der Löseseite (331aD) des Zahns (331) fixiert ist.

5. Lenksäule nach Anspruch 4, **dadurch gekennzeichnet, dass** das Dämpfungselement (334) die Form eines Stiftes (333) aus einem flexiblen Material hat und aus einem Körper (333a) besteht, der ein zylindrisches Zwischenteil mit kreisförmigem Querschnitt bildet, und zwei vergrößerte Enden (334b), die von zwei gegenüberliegenden Seiten der Rosette (33) abstehen, wobei der Körper (333a) in einen kreisförmigen Ausschnitt (333) mit Abmessungen, die größer sind als die einer kreisförmigen Halbscheibe, am Löseende des Kreissegments (335) eingerastet ist.

6. Lenksäule nach Anspruch 2, **dadurch gekennzeichnet, dass** die Rampe (341) die Form einer schraubenförmigen Fläche hat, deren Achse die geometrische Achse (YY) der Spannachse (31) ist.

7. Lenksäule nach Anspruch 6, **dadurch gekennzeichnet, dass** die Zähne (331) und die Anschläge (343) Seiten (331S, 331D, 343S, 343D) mit radialer Ausrichtung in Bezug auf die geometrische Achse (YY) der Spannachse (31) aufweisen.

8. Lenksäule nach Anspruch 7, **dadurch gekennzeichnet, dass** die Stützfläche eines Zahns (331) auf der Rosette (33) kleiner ist als der Spalt (B) zwischen dem Ursprung (340) der Rampe (341) und der Seite (343D) des Anschlags (343), die diesen Spalt (B) mit dem Ursprung (340) abgrenzt.

9. Lenksäule nach Anspruch 1, **dadurch gekennzeichnet, dass** die ausfahrbare Verbindung durch Kugelgelenkstangen (341) gebildet ist, die in Kugelgelenkpfannen der Rosette (33') und des Stützblocks (34') aufgenommen sind.

## Claims

1. Steering column comprising:
- a cradle (21) intended to be tiltably mounted on the body of a vehicle, the cradle being provided with a deformable bearing (22),
- a sleeve (2) received in the deformable bearing (22), the sleeve being provided with a tube carrying a steering wheel, the tube being secured to the sleeve for translation therewith but free in rotation with respect thereto, the sleeve (2) being adjusted by sliding in the loosened deformable bearing (22),
- a device (3) for clamping the deformable bearing (22) comprising:
* a control lever (32)
* a rosette (33) secured to one end of the control lever (32), the rosette (33) having at least one circular segment (335, 335'), one end of which constitutes a clamping limit, and the other end constituting a loosening limit having a damping element (334),
* a clamping shaft (31) having a first end fixed to the rosette (33) and a second end (312) engaging with the deformable bearing (22)
* a support block (34) passed through by the clamping shaft (31), fixed in rotation with respect to the cradle (21) and free in translation along the clamping shaft (31), the support block (34, 34') having a stop (343, 343') projecting into the circular segment (335, 335') to come against the clamping limit in the clamped position and against the damping element (334, 334') in the loosened position,
* a deployable support connection between the rosette (33) and the support block (34) which,
** for movement of the lever (32) in a clamping direction around the clamping shaft, tightens the bearing (22) between the second end of the screw and the support block to lock the deformable bearing on the sleeve, and
** for movement of the lever (32) in a loosening direction, releases the bearing (22) and the sleeve (2) for adjustment,
**characterized in that** the damping element is selected from the group comprising:
- a damping element (334) formed of a cylindrical body having a circular cross section (334a), bordered by two widened ends (334b),
- a damping element (334') formed of a cylindrical body (334'a) having a circular cross section, bordered by one widened end (334'b),
- a damping element (334") formed by a cylindrical body (334"a) having a circular cross section,
- a damping element (334"') formed of a cylindrical body (334"'a) having an oval cross section forming a protrusion (334"'c) and a widened end (334"'c).

2. Steering column according to claim 1, **characterized in that** the deployable connection is formed:
- by teeth (331) of the rosette (33), the teeth (331) leaving circular segments (335) between them, and
- by ramps (341) of the support block (34), distributed around the bearing of the shaft (31), in the form of a ramp (341) associated with each tooth (331), the ramps (341) ending with a stop (343) projecting into the circular segments (335) between two teeth (331) so that each tooth goes up the associated ramp (341) during the clamping movement and down during the loosening movement, the stop (343) of at least one of the ramps (341) coming against the damping element (334).

3. Steering column according to claim 2, **characterized in that** each of the ramps (341) comprises a plateau (342) upstream of the stop (343) thereof in the clamping direction.

4. Steering column according to claim 2, **characterized in that** the damping element (334) is positioned on a release side (331aD) of one (331a) of the teeth (331), and fixed by clipping in a cutout (333) from the edge of the release side (331aD) of the tooth (331).

5. Steering column according to claim 4, **characterized in that** the damping element (334) has the shape of a pin (333) in a flexible material and is composed of a body (333a) forming a cylindrical intermediate part having a circular cross section, and having two widened ends (334b) projecting from two opposite faces of the rosette (33), the body (333a) being clipped into a circular cutout (333) having dimensions greater than those of a circular half-disc, at the loosening end of the circular segment (335).

6. Steering column according to claim 2, **characterized in that** the ramp (341) is in the shape of a helical surface, the axis of which is the geometric axis (YY) of the clamping shaft (31).

7. Steering column according to claim 6, **characterized in that** the teeth (331) and the stops (343) have sides (331S, 331D, 343S, 343D) which are radially oriented with respect to the geometric axis (YY) of the clamping shaft (31).

8. Steering column according to claim 7, **characterized in that** the support surface of a tooth (331) on the rosette (33) is smaller than the interval (B) between the origin (340) of the ramp (341) and the side (343D) of the stop (343) delimiting said interval (B) with the origin (340).

9. Steering column according to claim 1, **characterized in that** the deployable connection is formed by rods (341) having ball joints, received in ball-joint cups of the rosette (33') and of the support block (34').
